# EUROPEAN PATENT SPECIFICATION

(11) **EP 3 820 044 B1**
(45) Date of publication and mention of the grant of the patent: **28.08.2024**
(21) Application number: 19897682.1
(22) Date of filing: 06.09.2019
(51) Int. Cl.: H02P 25/04, H02P 27/08

(54) **STEPLESS SPEED REGULATION CIRCUIT AND METHOD FOR A MOTOR**
SCHALTUNG UND VERFAHREN ZUR STUFENLOSEN DREHZAHLREGELUNG FÜR EINEN MOTOR
CIRCUIT ET PROCÉDÉ DE RÉGULATION DE VITESSE CONTINUE D'UN MOTEUR

(30) Priority: 19.12.2018 CN 201811566584
(43) Date of publication of application: 12.05.2021
(73) Proprietor: Xiamen Kiwi Instruments Corporation, Xiamen, Fujian 361000 (CN)
(72) Inventor: YU, Huijie, Xiamen, Fujian 361000 (CN); LI, Ganfu, Zhuhai, Guangdong 519000 (CN); ZHOU, Zhuoyuan, Zhuhai, Guangdong 519000 (CN); WANG, Shuguang, Xiamen, Fujian 361000 (CN)
(74) Representative: Thoma, Michael
(86) International application number: PCT/CN2019/104700
(87) International publication number: WO 2020/125072

(56) References cited:
- EP-A1- 3 258 588
- WO-A1-2007/113859
- CN-A- 101 707 471
- CN-A- 103 259 469
- CN-A- 106 026 729
- CN-A- 107 769 667
- CN-U- 203 071 864
- CN-U- 206 878 731
- JP-A- H10 191 676
- US-A- 5 789 723

## Description

### TECHNICAL Field

The present application relates generally to the field of electronics, and more particularly relates to a stepless speed regulation circuit for driving a motor according to the preamble of claim 1 and a stepless speed regulation method for a driving motor.

### BACKGROUND

Single-phase motors generally refer to asynchronous motors supplied by a single-phase AC (alternating current) power source provided by mains AC power supply. Since mains power supplies electricity very conveniently and cost-savingly for daily life, single-phase motors are widely used not only for industrial usage but also for civil daily life usage. With the developing civil life quality, the required quantity of single-phase motors for housekeeping appliances such as electrical fans increases rapidly. A single-phase motor regulates its rotation speed by using a motor speed regulation circuit.

One type of speed regulation method for a single-phase motor adopts an inductive mechanical switch to regulate rotation speed. By adjusting the inductance of an inductor connected in series, the inductive mechanical ratio between the auxiliary winding and the main winding is adjusted and thus the rotation speed is adjusted. However, this driving approach has limited regulation range of rotation speed, and cannot start or regulate at low speed.

Another type of speed regulation method for a single-phase motor adopts a reactance connected in series to perform stepless regulation of speed. This approach can realize a smooth speed regulation. However, the regulation range is also limited, the size of the reactance is too big, and the system efficiency is low.

A third type of method adopts a bidirectional thyristor to perform chopping control of voltage between terminals of a motor to realize speed regulation. This approach has wide usage for its low cost and simple structure. However, at low speed, the voltage has high distortion because its waveform is highly chopped, thus the power factor (PF) is low and may not meet the requirement for a power source. Further, this approach has high torque ripple and high noise.

A fourth type of method adopts an AC chopper, together with several electrically isolated auxiliary power sources, and many high voltage devices, for example, 8 high voltage diodes and 2 high voltage bidirectional switches which connect to separate grounds. Therefore, the circuit has a complicated design, wherein the high voltage devices are required to be electrically isolated from the control unit, and multiple power sources isolated from each other are required, so it is difficult to realize system integration. Accordingly, this approach has high system complexity and high cost, and thus is difficult to be practically used.

Yet another type of control method may adopt a frequency conversion inverter to regulate the speed. This approach requires an AC-DC (alternating current to direct current) converter circuit for rectifying and filtering an AC power into a constant DC power and a chopper circuit for chopping a square waveform signal for frequency conversion. Although this approach can regulate the amplitude and frequency simultaneously for flexible application, it requires a large capacitor after an input rectification circuit or requires an AC-DC switching circuit to obtain a constant DC power, and further requires a complex frequency conversion inverter to provide a variable-frequency-AC voltage source. Accordingly, this approach has large size, high cost and complex system operation. Also, the power factor is low due to the existence of the input rectification filtering capacitor. For example, the half load power factor is usually between 0.5 to 0.6. Thus, an additional preliminary PFC (power factor correction) circuit is required to be added for the high-power inverter, which further adds on cost and power loss. Furthermore, a stepless speed regulation circuit according to the preamble of claim 1 is known from JP H10 191676 A, wherein further stepless speed regulation circuits are known from US 5 789 723 A and WO 2007/113859 A1.

### SUMMARY

In order to address one or more problems in the above approaches of prior art, one purpose of the present application aims to provide an improved stepless speed regulation circuit and method for driving a single-phase motor so as to solve at least part of the above-mentioned deficiencies.

So as to address at least partly the above-mentioned problems, the present invention provides for a stepless speed regulation circuit as defined by claim 1 and a stepless speed regulation method as defined by claim 10, wherein preferred embodiments of the invention are laid down in the dependent claims. Thus, a stepless speed regulation circuit for driving a motor comprises: a switch circuit, having an input end, a ground end, a first output end and a second output end, wherein the input is configured to receive a unidirectional fluctuating steamed-bread-shaped wave signal obtained by full-wave rectification of a sinusoidal AC signal, the motor is coupled between the first output end and the second output end, the switch circuit comprises a first switch, a second switch, a third switch and a fourth switch, wherein the first switch is coupled between the input end and the first output end, the second switch is coupled between the input end and the second output end, the third switch is coupled between the second output end and the ground end, and the fourth switch is coupled between the first output end and the ground end; a synchronizing signal generation circuit, configured to generate a synchronizing signal, wherein the synchronizing signal is in a first state at a first half cycle period of the sinusoidal AC signal and is in a second state which is different from the first state at a second half cycle period of the sinusoidal AC signal; and a switch driving circuit, configured to select at least one switch from the first switch, the second switch, the third switch and the fourth switch to perform chopping at a first frequency according to the state of the synchronizing signal, and to form a sinusoidal envelope chopped signal between the first output end and the second output end, wherein the envelope line of the sinusoidal envelope chopped signal is synchronous with the waveform of the sinusoidal AC signal, and the first frequency is 10 times higher than the frequency of the sinusoidal AC signal.

When the synchronizing signal is in the first state, the switch driving circuit turns on the first switch, turns off the fourth switch, and performs chopping on the second switch and the third switch in reverse phases; and when the synchronizing signal is in the second state, the switch driving circuit turns on the second switch, turns off the third switch, and performs chopping on the first switch and the fourth switch in reverse phases.

In one embodiment, the switch driving circuit performs chopping on the at least one switch by outputting a pulse-width modulation (PWM) signal.

In one embodiment, the stepless speed regulation circuit further comprises a rectification circuit, wherein the rectification circuit is configured to convert a mains sinusoidal AC signal into the unidirectional fluctuating steamed-bread-shaped wave signal.

In one embodiment, the synchronizing signal is generated according to the sinusoidal AC signal, and wherein when the sinusoidal AC signal is higher than zero, the synchronizing signal is in the first state, and when the sinusoidal AC signal is lower than zero, the synchronizing signal is in the second state which is different from the first state.

In one embodiment, the stepless speed regulation circuit further comprises a capacitor coupled between the input end and the ground end.

In one embodiment, the effective capacitance between the input end and the ground end is less than 4.7 µF when not considering the capacitance of the switch circuit.

In one embodiment, each of the first switch, the second switch, the third switch and the fourth switch comprises a high-voltage power transistor, and wherein the drain electrodes or the collectors of the first switch and the second switch are coupled to the input end, the source electrode or the emitter of the first switch is coupled to the first output end, the source electrode or the emitter of the second switch is coupled to the second output end; the source electrodes or the emitters of the third switch and the fourth switch are coupled to the ground end, the drain electrode or the collector of the third switch is coupled to the second output end, and the drain electrode or the collector of the fourth switch is coupled to the first output end.

In one embodiment, the switch driving circuit comprises: a logic circuit, having an input, a first output, a second output, a third output and a fourth output, wherein the input of the logic circuit is coupled to the output of the synchronizing signal generation circuit; a first half-bridge driving circuit, having two inputs and two outputs, wherein the two inputs of the first half-bridge driving circuit are respectively coupled to the first output and the second output of the logic circuit, and the two outputs of the first half-bridge driving circuit are respectively coupled to a control end of the first switch and a control end of the fourth switch; and a second half-bridge driving circuit, having two inputs and two outputs, wherein the two inputs of the second half-bridge driving circuit are respectively coupled to the third output and the fourth output of the logic circuit, and the two outputs of the second half-bridge driving circuit are respectively coupled to a control end of the second switch and a control end of the third switch.

In one embodiment, the motor comprises a single-phase asynchronous motor.

The aforementioned stepless speed regulation method for driving a motor comprises: full-wave rectifying a sinusoidal AC signal into a unidirectional fluctuating steamed-bread-shaped wave signal; inputting the unidirectional fluctuating steamed-bread-shaped wave signal into an input end of an H-bridge switch circuit; providing a synchronizing signa, wherein, at a first half cycle period of the sinusoidal AC signal, the synchronizing signal is in a first state, and at a second half cycle period of the sinusoidal AC signal, the synchronizing signal is in a second state; selecting at least one switch in the H-bridge switch circuit to perform chopping according to the state of the synchronizing signal, so as to provide a sinusoidal envelope chopped signal at output ends of the H-bridge switch circuit, wherein the envelope line of the sinusoidal envelope chopped signal is synchronous with the waveform of the sinusoidal AC signal; and driving the motor by using the sinusoidal envelope chopped signal, and regulating a rotation speed of the motor by adjusting the duty cycle of the chopping signal that performs chopping on the at least one switch. When the synchronizing signal is in the first state, a first switch of the H-bridge switch circuit is turned on, a fourth switch of the H-bridge switch circuit is turned off, and chopping in reverse phases are performed on a second switch of the H-bridge switch circuit and a third switch of the H-bridge switch circuit; and when the synchronizing signal is in the second state, a second switch of the H-bridge switch circuit is turned on, a third switch of the H-bridge switch circuit is turned off, and chopping in reverse phases are performed on a first switch of the H-bridge switch circuit and a fourth switch of the H-bridge switch circuit.

In one embodiment, the method step of selecting at least one switch in the H-bridge switch circuit to perform chopping comprises: providing a first driving signal which is synchronized with the synchronizing signal for driving a first switch of the H-bridge switch circuit; providing a second driving signal which is in reverse phase with the synchronizing signal for driving a second switch of the H-bridge switch circuit; performing AND operation of the first driving signal and a PWM signal to get a first chopping signal for driving a third switch of the H-bridge switch circuit; and performing AND operation of the second driving signal and the PWM signal to get a second chopping signal for driving a fourth switch of the H-bridge switch circuit.

In one embodiment, the method step of selecting at least one switch in the H-bridge switch circuit to perform chopping comprises: performing OR operation of the synchronizing signal and a PWM signal to get a first driving signal for driving a first switch of the H-bridge switch circuit; reversing the synchronizing signal and then performing OR operation of the reversed synchronizing signal and the PWM signal to get a second driving signal for driving a second switch of the H-bridge switch circuit; reversing the second driving signal to get a signal for driving a third switch of the H-bridge switch circuit; and reversing the first driving signal to get a signal for driving a fourth switch of the H-bridge switch circuit.

As mentioned before, the speed regulation circuit for driving a motor comprises: a switch circuit, having an input end, a ground end, a first output end and a second output end, wherein the input end is configured to receive a unidirectional fluctuating steamed-bread-shaped wave signal obtained by full-wave rectification of a sinusoidal AC signal, the motor is coupled between the first output end and the second output end, the switch circuit comprises a first switch, a second switch, a third switch and a fourth switch, wherein the first switch is coupled between the input end and the first output end, the second switch is coupled between the input end and the second output end, the third switch is coupled between the second output end and the ground end, and the fourth switch is coupled between the first output end and the ground end; a synchronizing signal generation circuit, having an output configured to provide a synchronizing signal associated with the sinusoidal AC signal; and a switch driving circuit, configured to, according to the synchronizing signal, turn on the first switch, perform chopping on the third switch, and turn off the second switch and the fourth switch at a first half cycle period of the sinusoidal AC signal, and to turn on the second switch, perform chopping on the fourth switch, and turn off the first switch and the third switch at a second half cycle period of the sinusoidal AC signal.

In one embodiment, the switch driving circuit comprises: a logic circuit, having an input and at least two outputs, wherein the input of the logic circuit is coupled to the output of the synchronizing signal generation circuit, and the outputs of the logic circuit provide at least two logic signals; and a driving stage circuit, having at least two inputs and at least two outputs, wherein the at least two inputs are configured to receive the at least two logic signals from the logic circuit, and the at least two outputs of the driving stage circuit are configured to control the first switch, the second switch, the third switch and the fourth switch.

In one embodiment, the synchronizing signal is in a first state at a first half cycle period of the sinusoidal AC signal and is in a second state which is different from the first state at a second half cycle period of the sinusoidal AC signal; the signal at a control end of the first switch is synchronized with the synchronizing signal; the signal at a control end of the second switch is in reverse phase with the synchronizing signal; the signal at a control end of the fourth switch is an AND signal of the signal at the control end of the second switch and a PWM signal; and the signal at a control end of the third switch is an AND signal of the signal at the control end of the first switch and the PWM signal.

As mentioned before, the speed regulation circuit for driving a motor comprises: a switch circuit, having an input end, a ground end, a first output end and a second output end, wherein the input end is configured to receive a unidirectional fluctuating steamed-bread-shaped wave signal obtained by full-wave rectification of a sinusoidal AC signal, the motor is coupled between the first output end and the second output end, the switch circuit comprising a first switch, a second switch, a third switch and a fourth switch, wherein the first switch is coupled between the input end and the first output end, the second switch is coupled between the input end and the second output end, the third switch is coupled between the second output end and the ground end, and the fourth switch is coupled between the first output end and the ground end; a synchronizing signal generation circuit, having an output configured to provide a synchronizing signal associated with the sinusoidal AC signal; and a switch driving circuit, configured to, according to the synchronizing signal, turn on the first switch, turn off the fourth switch and perform chopping on the second switch and the third switch in reverse phases at a first half cycle period of the sinusoidal AC signal, and to turn on the second switch, turn off the third switch, perform chopping on the first switch the fourth switch in reverse phases at a second half cycle period of the sinusoidal AC signal.

Furthermore, the speed regulation circuit for driving a motor may comprise: an H-bridge switch circuit, having an input end, a ground end, a first output end and a second output end, wherein the input end is configured to receive a unidirectional fluctuating steamed-bread-shaped wave signal obtained by full-wave rectification of a sinusoidal AC signal, and the motor is coupled between the first output end and the second output end; and a switch driving circuit, configured to perform chopping on at least one switch in the H-bridge switch circuit at a first half cycle period of the sinusoidal AC signal and perform chopping on at least another switch in the H-bridge switch circuit at a second half cycle period of the sinusoidal AC signal, so as to form a sinusoidal envelope chopped signal between the first output end and the second output end, and wherein the half-load power factor of the speed regulation circuit is higher than 0.9.

The stepless motor speed regulation circuit and method provided by the present application have a small circuit size, effectively reduce system complexity and cost, have high power factor, and greatly improve efficiency at low speed of the motor, and the advantages thereof will be illustrated in combination with the following specific embodiments.

### BRIEF DESCRIPTION OF THE DRAWINGS

FIG. 1 illustrates a circuit diagram of a stepless speed regulation circuit for driving a motor according to an embodiment of the present application.
FIG. 2 illustrates a signal waveform diagram of signals corresponding to the circuit in FIG. 1 according to an embodiment of the present application.
FIG. 3 illustrates a system diagram of a stepless speed regulation circuit for a single-phase motor according to an embodiment of the present application.
FIG. 4 illustrates a signal waveform diagram of signals corresponding to the circuit in FIG. 3 for stepless speed regulation control of a single-phase motor according to an embodiment of the present application.
FIG. 5 illustrates a signal waveform diagram of signals corresponding to the circuit in FIG. 3 for stepless speed regulation control of a single-phase motor according to another embodiment of the present application.
FIG. 6 illustrates a block diagram of a stepless speed regulation method for driving a motor according to an embodiment of the present application.
FIG. 7 illustrates a circuit diagram of a synchronizing signal generation circuit according to an embodiment of the present application.
FIG. 8 illustrates a signal waveform diagram of a sinusoidal envelope chopped signal, its envelope line and a sinusoidal AC signal Vsin accordingly to an embodiment of the present application.
FIG. 9 illustrates a test waveform diagram of a prototype device according to an embodiment of the present application.
FIG. 10 illustrates a comparison testing diagram of input power at different rotation speeds of motor with respect to a prototype device according to an embodiment of the present application and a prior art device.
FIG. 11 illustrates a comparison testing diagram of input power factor at different rotation speeds of motor with respect to a prototype device according to an embodiment of the present application and a prior art device.

Identical reference signs in different figures represent the same or similar component or part.

### DETAILED DESCRIPTION OF SPECIFIC EMBODIMENTS

In order to further help understanding the present application, hereinafter, the preferred implementation ways of the present application will be described in conjunction with embodiments, however, it should be understood that, the described embodiments are only for further illustrating the features and advantages of the present application, and are not to limit the present application as defined by the appended claims.

The description in this part is only for several typical embodiments, and the present application is not limited to the scope of these described embodiments. The combinations of different embodiments, the exchange of features in different embodiments, and the replacement of some features in the embodiments with the same or similar prior art approaches are also within the spirit and scope of the present application.

The term "couple" as used herein, is defined as either directly connecting, or indirectly connecting one to another via intermediary such as via an electrical conducting medium, e.g., a conductor, which may have a parasitic inductance or capacitance; also including connection via other active or passive devices, e.g., circuit(s) or component(s) such as a switch or a follower circuit, as would be known to a person skilled in the art, which can realize the same or similar function or purpose.

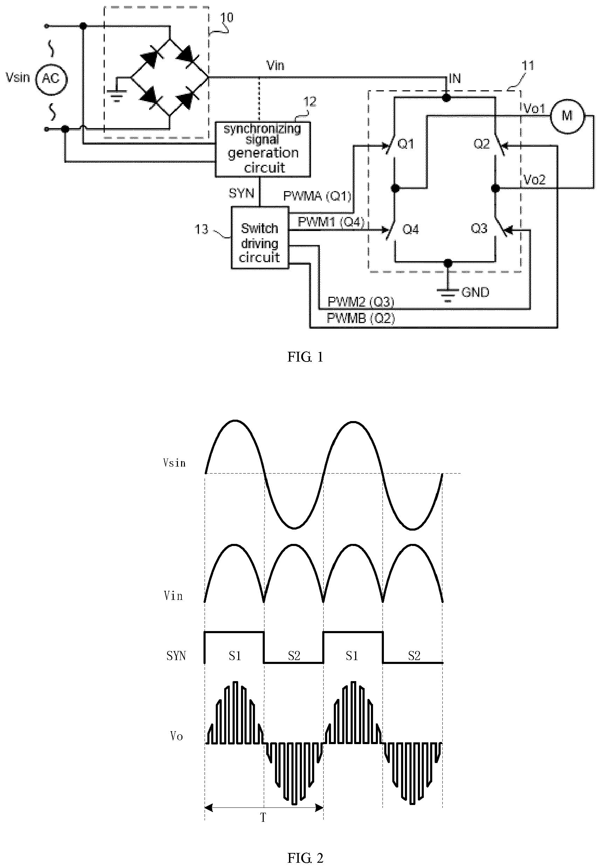

FIG. 1 illustrates a stepless speed regulation circuit for driving a motor according to an embodiment of the present application. Preferably, the stepless speed regulation circuit is used to drive a single-phase asynchronous motor M. The stepless speed regulation circuit comprises a rectification circuit 10, a switch circuit 11, a synchronizing signal generation circuit 12 and a switch driving circuit 13. The rectification circuit 10 full-wave rectifies a sinusoidal AC signal Vsin into a unidirectional fluctuating steamed-bread-shaped wave signal Vin. Preferably, the sinusoidal AC signal Vsin is mains AC power, which has a commercial frequency such as 50 hertz. In some embodiment, the stepless speed regulation circuit may not comprise the rectification circuit 10, and a rectification circuit is arranged external to the stepless speed regulation circuit. The motor M may comprise other types of motor.

The switch circuit 11 has an input end IN, a ground end GND, a first output end Vo1 and a second output end Vo2. The input end IN of the switch circuit 11 receives the unidirectional fluctuating steamed-bread-shaped wave signal Vin. The motor M is coupled between the first output end Vo1 and the second output end Vo2. The ground end GND is coupled to a reference ground. Wherein the unidirectional fluctuating steamed-bread-shaped wave signal Vin is a signal obtained by full-wave rectification of the sinusoidal AC signal Vsin.

The switch circuit 11 comprises a first switch Q1, a second switch Q2, a third switch Q3 and a fourth switch Q4. The first switch Q1 is coupled between the input end Vin and the first output end Vo1. The second switch Q2 is coupled between the input end Vin and the second output end Vo2. The third switch Q3 is coupled between the second output end Vo2 and the ground end GND, and the fourth switch Q4 is coupled between the first output end Vo1 and the ground end GND. The switch circuit 11 with the above configuration can also be called an H-bridge switch circuit.

The synchronizing signal generation circuit 12 is used to generate a synchronizing signal SYN associated with the sinusoidal AC signal Vsin, or associated with the unidirectional fluctuating steamed-bread-shaped wave signal Vin. In one embodiment, with reference to FIG. 2, the synchronizing signal SYN has a first state S1 having a first voltage level, such as HIGH voltage level, and a second state S2 having a second voltage level which is different from the first voltage level, such as LOW voltage level. The first state S1 and the second state S2 are alternating. A period of the first state S1 is corresponding to a cycle period of the unidirectional fluctuating steamed-bread-shaped wave signal Vin, and a period of the second state S2 is corresponding to another adjacent cycle period of the unidirectional fluctuating steamed-bread-shaped wave signal Vin. At a first half cycle period of the sinusoidal AC signal Vsin, the synchronizing signal SYN is in the first state S1, such as HIGH level. And at a second half cycle period of the sinusoidal AC signal Vsin, the synchronizing signal SYN is in the second state S2, such as LOW level, which is different from the first state S1. In an embodiment, the synchronizing signal generation circuit 12 generates the synchronizing signal SYN according to the sinusoidal AC signal Vsin before being rectified, referring to FIG. 1. Preferably, the synchronizing signal SYN is generated according to the mains AC power, and the frequency of the synchronizing signal SYN is the same as the frequency of the mains AC power, and the synchronizing signal SYN is on HIGH voltage level at a first half cycle period of the mains AC power and is on LOW voltage level at a second half cycle period of the mains AC power. In another embodiment, the synchronizing signal SYN is generated according to the unidirectional fluctuating steamed-bread-shaped wave signal Vin, referring to the dotted line in FIG. 1. For example, the synchronizing signal SYN is on HIGH voltage level in a period corresponding to an odd number cycle period of the unidirectional fluctuating steamed-bread-shaped wave signal Vin, and is on LOW voltage level in a period corresponding to an even number cycle period of the unidirectional fluctuating steamed-bread-shaped wave signal Vin.

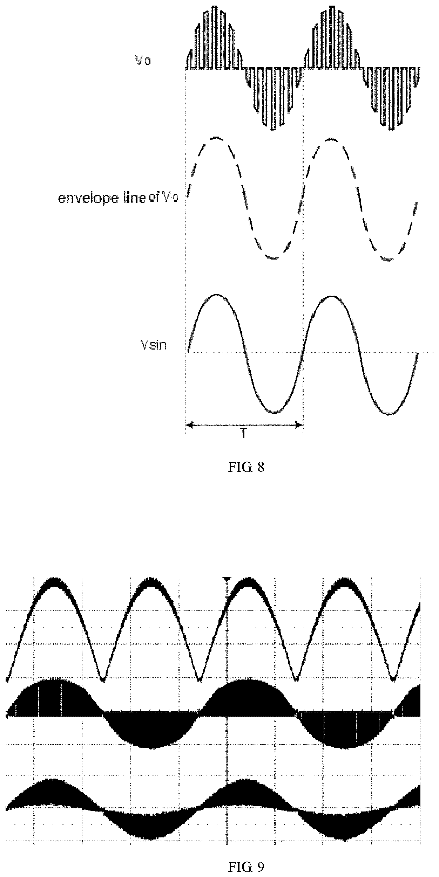

The switch driving circuit 13 provides several driving signals PWMA, PWMB, PWM2 and PWM1 to control the switching states of the first switch Q1, the second switch Q2, the third switch Q3 and the fourth switch Q4, respectively, according to the state of the synchronizing signal SYN. By controlling the states of the driving signals PWMA, PWM1, PWM2 and PWMB, at least one switch from the first switch Q1, the second switch Q2, the third switch Q3 and the fourth switch Q4 is selected in different time periords, and chopping at a second frequency is performed on the selected at least one switch, in order to form a sinusoidal envelope chopped signal Vo between the first output end Vo1 and the second output end Vo2, where Vo=Vo1-Vo2. and wherein the envelope line of the sinusoidal envelope chopped signal Vo is synchronous with the waveform of the sinusoidal AC signal Vsin, which means they have the same frequency (same period T) and similar contour, referring to FIG. 8. Preferably, the envelope line 81 of the sinusoidal envelope chopped signal Vo is a sinusoidal line having a frequency of mains power and being synchronous with the sinusoidal AC signal Vsin. Preferably, the switch driving circuit 13 provides a pulse-width modulation (PWM) signal having a second frequency to perform chopping on at least one switch, and accordingly the chopping frequency of the sinusoidal envelope chopped signal Vo is the second frequency. The rotation speed of the motor M is steplessly regulated by adjusting the duty cycle of the PWM signal. And the effective value Voe of the output voltage Vo is: Voe=Vine*Duty, where Vine is the effective value of the input voltage Vin, and Duty is the duty cycle of the PWM signal. The effective value Voe is used to regulate the rotation speed of the motor M.

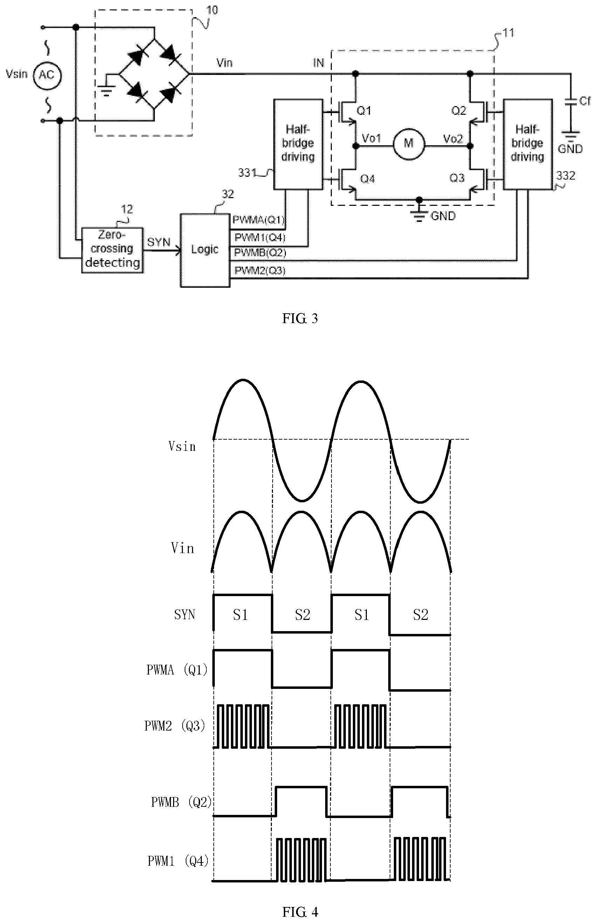

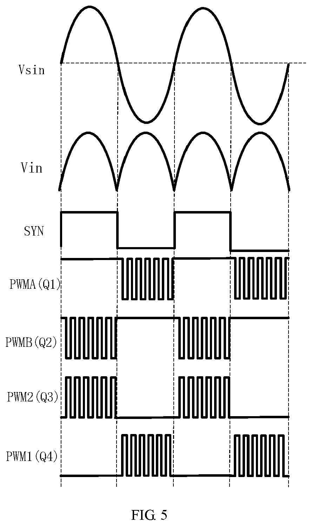

In an embodiment referring to FIG. 4, at a first half cycle period of the sinusoidal AC signal Vsin, the synchronizing signal SYN is in a first state S1, and the switch driving circuit 13 performs chopping on the third switch Q3 at a second frequency; and at a second half cycle period of the sinusoidal AC signal Vsin, the synchronizing signal SYN is in a second state S2, and the switch driving circuit 13 performs chopping on the fourth switch Q4 at a second frequency, in order to form a sinusoidal envelope chopped signal between the first output end Vo1 and the second output end Vo2. Accordingly, as shown in FIG. 4, in each time period (the synchronizing signal SYN being either in the state S1 or in the state S2), chopping is selectively performed on one switch at the second frequency, in order to form the sinusoidal envelope chopped signal Vo which is chopped all along as shown in FIG. 2. In an embodiment referring to FIG. 5, when the synchronizing signal SYN is in a first state S1, chopping is performed on the second switch Q2 and the third switch Q3 at a PWM frequency which is the second frequency (the chopping signals thereof are in reverse phases); and when the synchronizing signal SYN is in a second state S2, chopping is performed on the first switch Q1 and the fourth switch Q4 are chopped at the second frequency (the chopping signals thereof are in reverse phases), in order to form a sinusoidal envelope chopped signal between the first output end Vo1 and the second output end Vo2. Accordingly, as shown in FIG. 5, in each time period (the synchronizing signal SYN being either in the state S1 or in the state S2), chopping is selectively performed on two switches at the second frequency, in order to form the sinusoidal envelope chopped signal Vo which is chopped all along as shown in FIG. 2. Detailed control methods will be described below in embodiments with reference to FIG. 4 and FIG. 5.

FIG. 2 illustrates a signal waveform diagram of signals corresponding to the circuit in FIG. 1 according to an embodiment of the present application. The sinusoidal envelope chopped signal generated between the first output end Vo 1 and the second output end Vo2 of the switch circuit 11, which is the differential value of the voltage Vo 1 at the first output end and the voltage Vo2 at the second output end, is the chopped signal Vo shown in FIG. 2, wherein the envelope line of the sinusoidal envelope chopped signal Vo is synchronous with the sinusoidal AC signal Vsin, preferably, the envelope line has a sine wave shape. Preferably, the chopping frequency for the sinusoidal envelope chopped signal Vo, i.e., the second frequency, is 10 times higher than the frequency of the sinusoidal AC signal Vsin. In one embodiment, the second frequency may be a variable frequency.

In one embodiment, the unidirectional fluctuating steamed-bread-shaped wave signal Vin is obtained by full-wave rectification of a mains AC power signal, and the cycle period T of the sinusoidal envelope chopped signal Vo equals the cycle period of the mains sinusoidal AC power. The frequency of the unidirectional fluctuating steamed-bread-shaped wave signal Vin is 2 times the frequency of the mains AC power.

By using the sinusoidal envelope chopped signal Vo to drive the single-phase motor, the rotation speed of the single-phase motor can be steplessly regulated by adjusting the duty cycle of the chopped signal Vo. Meanwhile, since the shape of the envelope line of the sinusoidal envelope chopped signal Vo is highly consistent with the waveform shape of the mains AC power signal, the waveform shape of the input current at the AC input of the stepless motor is also highly consistent with the waveform shape of the mains AC power voltage, thus the power factor (PF) of the stepless speed regulation circuit is very high.

FIG. 3 illustrates a stepless speed regulation circuit for driving a single-phase motor according to an embodiment of the present application. The stepless speed regulation circuit comprises a rectification circuit 10, a switch circuit 11, a synchronizing signal generation circuit 12 and a switch driving circuit. The rectification circuit 10 converts a sinusoidal AC signal Vsin into a unidirectional fluctuating steamed-bread-shaped wave signal Vin. Preferably, the sinusoidal AC signal Vsin is a sinusoidal AC signal of mains power. Of course, since the sinusoidal AC signal of mains power may be affected by other factors such as electro-magnetic interference, the sinusoidal AC signal Vsin may have distortions and the shape thereof may not be a standard sinusoidal shape.

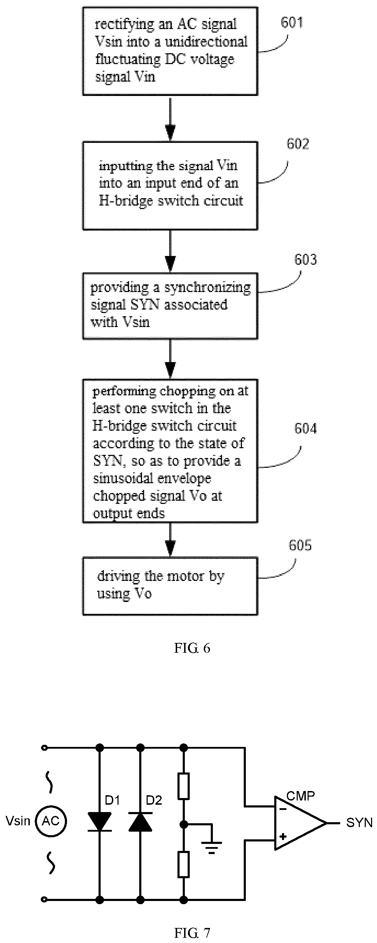

The synchronizing signal generation circuit 12 generates a synchronizing signal SYN according to the sinusoidal AC signal Vsin. In the shown embodiment, the synchronizing signal generation circuit 12 may comprise a zero-crossing detecting circuit, and every time when the sinusoidal AC signal Vsin crosses zero, the state of the synchronizing signal SYN reverses. FIG. 7 illustrates a synchronizing signal generation circuit according to an embodiment of the present application and the details thereof will be described below. Accordingly (referring to FIG. 4), when the sinusoidal AC signal Vsin is higher than zero, the synchronizing signal SYN is in a first state (HIGH level), and when the sinusoidal AC signal Vsin is lower than zero, the synchronizing signal SYN is in a second state S2 (LOW level) which is different from the first state S1. Or in other words, the synchronizing signal SYN is in a first state S1 at a first half cycle period of the sinusoidal AC signal Vsin and is in a second state S2 which is different from the first state at a second half cycle period of the sinusoidal AC signal Vsin.

Continuing to refer to FIG. 3, the switch driving circuit comprises a logic circuit 32, a first half-bridge driving circuit 331 and a second half-bridge driving circuit 332. The switch driving circuit performs chopping on at least one switch from the switches Q1-Q4 in different time periods by outputting a pulse-width modulation (PWM) signal according to the state of the synchronizing signal SYN. The logic circuit 32 generates four driving signals PWMA, PWM1, PWMB and PWM2 according to the synchronizing signal SYN for driving the switches Q1-Q4, respectively. Specifically, the logic circuit 32 has an input, a first output, a second output, a third output and a fourth output, wherein the input of the logic circuit 32 is coupled to the output of the synchronizing signal generation circuit 12 to receive the synchronizing signal SYN. The first output, the second output, the third output and the fourth output of the logic circuit 32 provide the four driving signals PWMA, PWM1, PWMB and PWM2, respectively. In an embodiment, referring to FIG. 4, the signal PWMA provided by the first output of the logic circuit 32 is synchronized with the synchronizing signal SYN, and thus the signal at a control end of the first switch Q1 is synchronized with the synchronizing signal SYN. The signal PWMB provided by the third output of the logic circuit 32 is in reverse phase with the synchronizing signal SYN, and thus the signal at a control end of the second switch Q2 is in reverse phase with the synchronizing signal SYN. The signal PWM1 provided by the second output of the logic circuit 32 is an AND signal obtained by performing AND operation of the signal PWMB provided at the third output of the logic circuit 32 and a pulse-width modulation (PWM) signal, and thus the signal at a control end of the fourth switch Q4 is an AND signal of the signal PWMB at the control end of the second switch Q2 and the PWM signal. The signal PWM2 provided by the fourth output of the logic circuit 32 is an AND signal by performing AND operation of the signal PWMA at the first output of the logic circuit and the pulse-width modulation (PWM) signal, and thus the signal at a control end of the third switch Q3 is an AND signal of the signal PWMA at the control end of the first switch Q1 and the PWM signal. In another embodiment, with reference to FIG. 5, the signal PWMA provided by the first output of the logic circuit 32 is an OR signal by performing OR operation of the synchronizing signal SYN and a PWM signal, the signal PWMB provided by the third output of the logic circuit 32 is an OR signal by performing OR operation of the PWM signal and a reversed signal which is in reverse phase with the synchronizing signal SYN. The signal PWM1 provided by the second output of the logic circuit 32 is a reversed signal of the signal PWMA provided at the first output. And the signal PWM2 provided by the fourth output of the logic circuit 32 is a reversed signal of the signal PWMB provided at the third output. In one embodiment, each of the driving signals PWMA, PWM1, PWMB and PWM2 comprises dead-zone time intervals in order to prevent mistakenly turning on the switches simultaneously.

A driving stage circuit comprises the first half-bridge driving circuit 331 and the second half-bridge driving circuit 332.

The first half-bridge driving circuit 331 has two inputs and two outputs, wherein the two inputs of the first half-bridge driving circuit 331 are coupled to the first output and the second output of the logic circuit 32 to receive the signals PWMA and PWM1, respectively. The two outputs of the first half-bridge driving circuit 331 are coupled to the control end of the first switch Q1 and the control end of the fourth switch Q4 so as to control the ON and OFF states of the switches Q1 and Q4, respectively. Specifically, the first driving signal PWMA controls the first switch Q1 and the second driving signal PWM1 controls the fourth switch Q4.

The second half-bridge driving circuit 332 has two inputs and two outputs, wherein the two inputs of the second half-bridge driving circuit 332 are coupled to the third output and the fourth output of the logic circuit 32 to receive the signals PWMB and PWM2, respectively. The two outputs of the second half-bridge driving circuit 332 are coupled to the control end of the second switch Q2 and the control end of the third switch Q3 so as to control the ON and OFF states of the switches Q2 and Q3, respectively. Specifically, the third driving signal PWMB controls the second switch Q2 and the fourth driving signal PWM2 controls the third switch Q3.

In other embodiments, the switch driving circuit may have different structures. In one embodiment, the logic circuit has two outputs for providing two signals PWMA and PWMB as shown in FIG. 5, or for providing two signals PWM1 and PWM2 as shown in FIG. 5, and through amplification by the driving stage circuit, the two signals are amplified to respectively drive the four switches, wherein the switches Q1 and Q4 have opposite doping types and are controlled by the signal PWMA or PWM1, and Q2 and Q3 have opposite doping types and are controlled by the signal PWMB or PWM2. The opposite doping types cause the two switches to be in opposite states under the action of the same switching signal. Off course, the driving stage circuit may provide four driving signals as shown in FIG. 5 based on two input signals for controlling the four switches. In another embodiment, the logic circuit may have three outputs and provide three signals PWMA, PWM1 and PWM2 as shown in FIG. 4, and through amplification by the driving stage circuit, the three driving signals are amplified to respectively drive the switches Q1, Q2, Q3 and Q4, wherein the switches Q1 and Q2 have opposite doping types. Or in another embodiment, the driving stage circuit provides four driving signals for driving four switches with the same doping type. In one embodiment, the logic circuit provides four logic signals PWMA, PWMB, PWM1 and PWM2, and the driving stage circuit comprises a full-bridge driving circuit configured to receive the four logic signals and provide four driving signals for controlling the four switches Q1, Q2, Q3 and Q4, respectively.

In one embodiment as shown in FIG. 3, each of the first switch Q1, the second switch Q2, the third switch Q3 and the fourth switch Q4 comprises a MOSFET (Metal-Oxide-Semiconductor Field-Effect Transistor), wherein the drain electrodes of the first switch Q1 and the second switch Q2 are coupled to the input end IN, the source electrode of the first switch Q1 is coupled to the first output end Vo1, the source electrode of the second switch Q2 is coupled to the second output end Vo2; the source electrodes of the third switch Q3 and the fourth switch Q4 are coupled to the ground end GND, the drain electrode of the third switch Q3 is coupled to the second output end Vo2, and the drain electrode of the fourth switch Q4 is coupled to the first output end Vo1. In other embodiments, each of the switches Q1-Q4 may comprise other types of high-voltage power transistors, for example, a JFET (Junction Field-Effect Transistor), or a BJT (Bipolar Junction Transistor). In one embodiment, each of the switches Q1, Q2, Q3 and Q4 comprises a BJT, wherein the collectors of the first switch Q1 and the second switch Q2 are coupled to the input end IN, the emitter of the first switch Q1 is coupled to the first output end Vo1, and the emitter of the second switch Q2 is coupled to the second output end Vo2; the emitters of the third switch Q3 and the fourth switch Q4 are coupled to the ground end GND, the collector of the third switch Q3 is coupled to the second output end Vo2, and the collector of the fourth switch Q4 is coupled to the first output end Vo1. When each of the switches Q1, Q2, Q3 and Q4 comprises a BJT, a diode may be parallelly coupled between the emitter and the collector of each switch, to provide a freewheeling current path. In one embodiment, the switches Q1 and Q2 each comprises a first type of power transistor and the switches Q3 and Q4 each comprises another type of power transistor.

In the embodiment as shown in FIG. 3, a parasitic diode exists between the source electrode and the drain electrode of each switch, and when the switch Q1 or Q2 is turned OFF, current would flow through its parasitic diode. Accordingly, the stepless speed regulation circuit for a single-phase motor further comprises a capacitor Cf coupled between the input end IN and the ground end GND of the switch circuit 11, in order to provide a freewheeling current path for the parasitic diodes of the switches Q1 or Q2 when the switch Q1 or Q2 is in OFF state, thereby eliminating sudden changes of the voltage between the first output end Vo1 and the second output end Vo2. Since the capacitor Cf is only used to provide a freewheeling current path, there is no need to adopt a large capacitor with a high capacitance value, instead, a small capacitor is adopted. In one embodiment, the capacitor Cf comprises a thin-film capacitor. Accordingly, large capacitors such as an electrolytic capacitor or an additional AC-DC converter which are adopted for obtaining a constant DC power in other techniques are dispensed with, thus the system size and cost are greatly reduced. In one embodiment, the capacitance of the capacitor Cf is about 0.47 µF (microfarad). In one embodiment, the capacitance of the capacitor Cf is about 0.33 µF. In one embodiment, when not considering the capacitance of the switch circuit 11, such as the parasitic capacitance or equivalent working capacitance thereof, for example, when the switch circuit 11 is removed, the effective capacitance between the input end IN and the ground end GND is less than 1 µF. When not considering the capacitance of switching circuit 11, the effective capacitance between the input end IN and the ground end GND may also be less than 4.7 µF, which is also far less than the capacitance of the electrolytic capacitor adopted in a comparison technique which usually has a capacitance value of tens to hundreds of microfarad.

FIG. 4 illustrates a signal waveform diagram of signals corresponding to the circuit in FIG. 3 for stepless speed regulation control of a single-phase motor according to an embodiment of the present application. The signals respectively represent, from top to bottom, the sinusoidal AC signal Vsin, the unidirectional fluctuating steamed-bread-shaped wave signal Vin, the synchronizing signal SYN, the switch driving signal PWMA for driving the first switch Q1, the switch driving signal PWM2 for driving the third switch Q3, the switch driving signal PWMB for driving the second switch Q2, and the switch driving signal PWM1 for driving the fourth switch Q4. The unidirectional fluctuating steamed-bread-shaped wave signal Vin is obtained by full-wave rectification of the sinusoidal AC signal Vsin. The states of the synchronizing signal SYN is associated with the unidirectional fluctuating steamed-bread-shaped wave signal Vin or the sinusoidal AC signal Vsin before being rectified. Wherein, at a first half cycle period of the sinusoidal AC signal Vsin, the synchronizing signal SYN is in HIGH level, and at a second half cycle period of the sinusoidal AC signal Vsin, the synchronizing signal SYN is in LOW level. Of course, the HIGH level and LOW level of the synchronizing signal SYN can be exchanged.

At a first half cycle period of the sinusoidal AC signal Vsin, the synchronizing signal SYN is in HIGH level (the first state S1), the driving signal PWMA is in HIGH level, the driving signal PWM2 is a higher frequency chopping signal, the driving signal PWMB and PWM1 are in LOW level. At this time, the switch driving circuit turns on the first switch Q1, performs chopping on the third switch Q3, and meanwhile turns off the second switch Q2 and the fourth switch Q4. At a second half cycle period of the sinusoidal AC signal Vsin, the synchronizing signal SYN is in LOW level (the second state S2), the driving signal PWMB is in HIGH level, the driving signal PWM1 is a higher frequency chopping signal, the driving signal PWMA and PWM2 are in LOW level. At this time, the switch driving circuit turns on the second switch Q2, performs chopping on the fourth switch Q4, and meanwhile turns off the first switch Q1 and the third switch Q3. In one embodiment, the chopping frequency of the higher frequency chopping signal (the second frequency) is 10 times higher than the frequency of the sinusoidal AC signal Vsin. From the waveform diagram, it can be seen that the first driving signal PWMA for driving the first switch Q1 of the H-bridge switch circuit is synchronized with the synchronizing signal SYN, the envelope line of the chopping signal PWM2 for driving the third switch Q3 of the H-bridge switch circuit has the same shape as the first driving signal PWMA. The second driving signal PWMB for driving the second switch of the H-bridge switch circuit is in reversed phase with the synchronizing signal SYN, and the envelope line of the chopping signal PWM1 for driving the fourth switch Q4 of the H-bridge switch circuit has the same shape as the second driving signal PWMB. In one embodiment, preferably, the chopping signal is a pulse-width modulation (PWM) signal having each pulse fully ON.

FIG. 5 illustrates a signal waveform diagram of signals corresponding to the circuit in FIG. 3 for stepless speed regulation control of a single-phase motor according to another embodiment of the present application. The signals respectively represent, from top to bottom, the sinusoidal AC signal Vsin, the unidirectional fluctuating steamed-bread-shaped wave signal Vin, the synchronizing signal SYN, the switch driving signal PWMA for driving the first switch Q1, the switch driving signal PWMB for driving the first switch Q2, the switch driving signal PWM2 for driving the third switch Q3, and the switch driving signal PWM1 for driving the fourth switch Q4. The unidirectional fluctuating steamed-bread-shaped wave signal Vin is obtained by full-wave rectification of the sinusoidal AC signal Vsin.

At a first half cycle period of the sinusoidal AC signal Vsin, the synchronizing signal SYN is in the first state S1 (HIGH level), the driving signal PWMA for driving the first switch Q1 is in HIGH level, the driving signal PWMB for driving the second switch Q2 is a PWM chopping signal, the driving signal PWM2 for driving the third switch Q3 is another PWM chopping signal which is in reverse phase with and has the same frequency as the driving signal PWMB, and the driving signal PWM1 for driving the fourth switch Q4 is in LOW level. At this time, the switch driving circuit turns on the first switch Q1, turns off the fourth switch Q4, and performs chopping on the second switch Q2 and third switch Q3 in reverse phases. That is, the switches Q2 and Q3 are turned OFF and ON at a chopping frequency (second frequency) higher than that of the unidirectional fluctuating steamed-bread-shaped wave signal Vin wherein, when the second switch Q2 is turned ON, the third switch Q3 is turned OFF, and when the second switch Q2 is turned OFF, the third switch Q3 is turned ON.

At a second half cycle period of the sinusoidal AC signal Vsin, the synchronizing signal SYN is in the second state S2 (LOW level), the driving signal PWMA for driving the first switch Q1 is a PWM chopping signal at the second frequency, the driving signal PWMB for driving the second switch Q2 is in HIGH level, the driving signal PWM2 for driving the third switch Q3 is in LOW level, and the driving signal PWM1 for driving the fourth switch Q4 is another PWM chopping signal which is in reverse phase with and has the same frequency as the driving signal PWMA. Accordingly, the switch driving circuit turns on the second switch Q2, turns off the third switch Q3, and performs chopping on the first switch Q1 and fourth switch Q4 in reverse phases. That is, the switches Q1 and Q4 are turned OFF and ON at the second frequency, wherein, when the first switch Q1 is turned ON, the fourth switch Q4 is turned OFF, and when the first switch Q1 is turned OFF, the fourth switch Q4 is turned ON. In one embodiment, the second frequency is 10 times higher than the frequency of the sinusoidal AC signal Vsin.

In the embodiments with reference to FIG. 3, FIG. 4 and FIG. 5, at least one switch from the switches Q1, Q2, Q3 and Q4 is selected according to the synchronizing signal SYN and chopping at a second frequency is performed on the selected at least one switch, in order to form a sinusoidal envelope chopped signal Vo between the first output end Vo1 and the second output end Vo2. For the embodiment shown in FIG. 4, when the synchronizing signal SYN is in the first state (S1), chopping at the second frequency is performed on the selected third switch Q3, and when the synchronizing signal SYN is in the second state (S2), chopping at the second frequency is performed on the selected fourth switch Q4, so as to form a sinusoidal envelope chopped signal Vo between the first output end Vo1 and the second output end Vo2 . For the embodiment shown in FIG. 5, when the synchronizing signal SYN is in the first state, chopping at the second frequency is performed on the selected second switch Q2 and the selected third switch Q3, wherein the chopping signals for the second switch Q2 and the third switch Q3 are in reverse phases, and when the synchronizing signal SYN is in the second state, chopping at the second frequency is performed on the selected first switch Q1 and the selected fourth switch Q4, wherein the chopping signals for the first switch Q1 and the fourth switch Q4 are in reverse phases, so as to form a sinusoidal envelope chopped signal Vo between the first output end Vo1 and the second output end Vo2.

In the control embodiments as shown in FIG. 4 and FIG. 5, according to the state of the synchronizing signal SYN, chopping at a second frequency is performed on at least one switch selected from the first switch Q1, the second switch Q2, the third switch Q3 and the fourth switch Q4 under each state of the synchronizing signal SYN, and meanwhile at least one switch thereof is turned ON and at least one switch thereof is turned OFF, so as to form a sinusoidal envelope chopped signal Vo between the first output end Vo1 and the second output end Vo2. For example, in FIG. 4, in a time period when the synchronizing signal SYN is at the first state (S1), chopping at the second frequency is performed on the third switch Q3, the first switch Q1 is turned ON, and the second switch Q2 and the fourth switch Q4 are turned OFF; and in a time period when the synchronizing signal SYN is at the second state (S2), chopping at the second frequency is performed on the fourth switch Q4 is chopped at second frequency, the second switch Q2 is turned ON, and the first switch Q1 and the third switch Q3 are turned OFF, and by such control, a sinusoidal envelope chopped signal Vo is generated between the first output end Vo1 and the second output end Vo2. In FIG. 5, in a time period when the synchronizing signal SYN is at the first state (S1), chopping at the second frequency is performed on the second switch Q2 and the third switch Q3 (with chopping signals in reverse phases), the first switch Q1 is turned ON, and the fourth switch Q4 is turned OFF; and in a time period when the synchronizing signal SYN is at the second state (S2), chopping at the second frequency is performed on the first switch Q1 and the fourth switch Q4 (with chopping signals in reverse phases), the second switch Q2 is turned ON, and the third switch Q3 is turned OFF, and by such selective control in different time periods, a sinusoidal envelope chopped signal Vo is generated between the first output end Vo1 and the second output end Vo2.

In the embodiments with reference to FIG. 3, FIG. 4 and FIG. 5, the stepless speed regulation circuit generates a sinusoidal envelope chopped signal Vo as shown in FIG. 2 between the first output end Vo1 and the second output end Vo2 of the switch circuit, where Vo=Vo1-Vo2. And referring to FIG. 8, the envelope line of the sinusoidal envelope chopped signal Vo is synchronous with the waveform of the sinusoidal AC signal Vsin, with the same frequency (same period T) and similar waveform shape.

FIG. 6 illustrates a block diagram of a stepless speed regulation method for driving a single-phase motor according to an embodiment of the present application. The method comprises steps 601-605. At step 601, the method comprises full-wave rectifying a sinusoidal AC signal Vsin into a unidirectional fluctuating steamed-bread-shaped wave signal Vin. Preferably, the sinusoidal AC signal Vsin is provided by mains AC power.

At step 602, the method comprises inputting the unidirectional fluctuating steamed-bread-shaped wave signal Vin into an input end of a switch circuit.

At step 603, the method comprises providing a synchronizing signal SYN based on the sinusoidal AC signal Vsin, wherein at a first half cycle period of the sinusoidal AC signal Vsin, the synchronizing signal SYN is in a first state, such as in HIGH level, and at a second half cycle period of the sinusoidal AC signal, the synchronizing signal SYN is in a second state, such as in LOW level. In one embodiment, the synchronizing signal SYN is generated by detecting the zero-crossing of the sinusoidal AC signal Vsin, and every time when the sinusoidal AC signal Vsin crosses zero, the state of the synchronizing signal SYN reverses. In another embodiment, the synchronizing signal SYN is generated according to the unidirectional fluctuating steamed-bread-shaped wave signal Vin, and at the end of each cycle of the unidirectional fluctuating steamed-bread-shaped wave signal Vin, the synchronizing signal SYN changes its state, and accordingly at each odd number cycle of the unidirectional fluctuating steamed-bread-shaped wave signal Vin, the synchronizing signal SYN is in the first state, and at each even number cycle of the unidirectional fluctuating steamed-bread-shaped wave signal Vin, the synchronizing signal SYN is in the second state.

At step 604, the method comprises selecting at least one switch in the H-bridge switch circuit to perform chopping according to the state of the synchronizing signal SYN, so as to provide a sinusoidal envelope chopped signal Vo at output ends of the switch circuit, wherein the envelope line of the sinusoidal envelope chopped signal is synchronous with the waveform of the sinusoidal AC signal. In one embodiment, the method step of selecting at least one switch in the H-bridge switch circuit to perform chopping according to the state of the synchronizing signal SYN comprises: providing a first driving signal PWMA for driving a first switch Q1 of an H-bridge switch circuit, wherein the first driving signal PWMA is synchronized with the synchronizing signal SYN; providing a second driving signal PWMB for driving a second switch Q2 of the H-bridge switch circuit, wherein the second driving signal PWMB is in reverse phase with the synchronizing signal SYN; providing a first chopping signal PWM2 which has an envelope line having the same shape as the first driving signal PWMA, which means performing AND operation of the first driving signal PWMA and a pulse-width modulation (PWM) signal to get the first chopping signal PWM2, for driving a third switch Q3 of the H-bridge switch circuit; and providing a second chopping signal PWM1 which has an envelope line having the same shape as the second driving signal PWMB, which means performing AND operation of the second driving signal PWMB and the PWM signal to get the second chopping signal PWM1, for driving a fourth switch Q4 of the H-bridge switch circuit. In one embodiment, the chopping frequency of the first chopping signal PWM2 and the second chopping signal PWM1 is 10 times higher than the frequency of the sinusoidal AC signal Vsin. In another embodiment, the switching control ways of the H-bridge switch circuit may also be as in FIG. 5, and the method step of selecting at least one switch in the H-bridge switch circuit to perform chopping according to the state of the synchronizing signal SYN comprises: performing OR operation of the synchronizing signal SYN and a pulse-width modulation (PWM) signal to get a first driving signal PWMA for driving the first switch Q1; reversing the synchronizing signal SYN and then performing OR operation of the reversed synchronizing signal and the PWM signal to get a second driving signal PWMB for driving the second switch Q2; reversing the second driving signal PWMB to get a signal PWM2 for driving the third switch Q3; and reversing the first driving PWMA to get a signal PWM1 for driving the fourth switch Q4.

At step 605, the method comprises driving the single-phase motor by using the sinusoidal envelope chopped signal Vo, and regulating a rotation speed of the motor according to the duty cycle of the chopping signal that performs chopping on the at least one switch.

FIG. 7 illustrates a synchronizing signal generation circuit according to an embodiment of the present application. The synchronizing signal generation circuit comprises two parallelly connected rectification diodes D1 and D2 coupled in opposite directions to two input terminals of the sinusoidal AC signal Vsin, two resistors having the same resistance connected in series, and a comparing circuit CMP. Wherein the diodes D1 and D2 are respectively coupled to the two input terminals of the input AC power source Vsin and configured to rectify the input sinusoidal AC signal Vsin, and wherein a common connection node of the resistors is coupled to the reference ground. The comparing circuit CMP has two inputs respectively coupled to the two input terminals of the sinusoidal AC signal Vin and is biased by a stable power supply relative to the reference ground. The output of the comparing circuit CMP is configured to provide a synchronizing signal SYN as shown in FIG. 2, wherein, when the sinusoidal AC signal Vsin is higher than zero, the synchronizing signal SYN is in HIGH level, and when the sinusoidal AC signal Vsin is lower than zero, the synchronizing signal SYN is in LOW level (zero voltage).

FIG. 8 illustrates a signal waveform diagram showing the sinusoidal envelope chopped signal Vo, the envelope line of the signal Vo, and the sinusoidal AC signal Vsin, accordingly to an embodiment of the present application. The shape of the envelope line of the signal Vo is synchronous with the sinusoidal AC signal Vsin, that is, the envelope line of the signal Vo and the waveform of the sinusoidal AC signal Vsin have the same cycle period and similar shapes. At a first half cycle period of the sinusoidal AC signal Vsin, the sinusoidal AC signal Vsin is higher than zero, and the envelope line of the sinusoidal envelope chopped signal Vo is also a half sinusoidal wave that is higher than zero. At a second half cycle period of the sinusoidal AC signal Vsin, the sinusoidal AC signal Vsin is lower than zero, and the envelope line of the sinusoidal envelope chopped signal Vo is also a half sinusoidal wave that is lower than zero.

FIG. 9 illustrates a test waveform diagram of a prototype device according to an embodiment of the present application. The first signal is the unidirectional fluctuating steamed-bread-shaped wave signal Vin which is obtained by full-wave rectification of the sinusoidal AC signal Vsin of mains power. The second signal is the voltage signal Vo (Vo=Vo1-Vo2) across the motor and its envelope line has the same frequency as and is synchronous with the sinusoidal AC signal before rectification. The third signal is the input current signal at the input terminals before the rectification circuit, and the envelope line of the input current signal is also a sine wave signal having the same frequency as the sinusoidal AC signal Vsin. Accordingly, the input voltage at the AC signal input terminals would have a good consistency with the input current, and therefore the system power factor would be high.

The envelope line of the sinusoidal envelope chopped signal Vo for driving a single-phase motor in embodiments of the present application is basically completely consistent with the waveform shape of AC mains power, and thus a very high power factor can be obtained.

In one embodiment, by performing chopping on at least one switch in the H-bridge switch circuit at a first half cycle period of the sinusoidal AC signal of mains power, for example, performing chopping on the third switch Q3 referring to FIG. 4, or performing chopping on the second switch Q2 and the third switch Q3 referring to FIG. 5, and by performing chopping on at least another switch in the H-bridge switch circuit at a second half cycle period of the sinusoidal AC signal, for example, performing chopping on the fourth switch Q4 referring to FIG. 4, or performing chopping on the first switch Q1 and the fourth switch Q4 referring to FIG. 5, a difference value signal is generated as a sinusoidal envelope chopped signal between the first output end and the second output end of the H-bridge switch circuit, and the half-load power factor of the motor speed regulation circuit is higher than 0.9. The half-load refers to that the output current is 50% of the full-amplitude output current. The H-bridge switch circuit may refer to the switch circuit as shown in FIG. 1 or FIG. 3.

In embodiments of the present application, the stepless speed regulation circuits for a motor can obtain a high power factor without adopting a PFC circuit at the frontend. Further, neither an AC-DC convertor circuit nor a large capacitor such as an electrolytic capacitor is required at the front stage, thus the system size is small and it is easy for integration, and further the circuit efficiency is high.

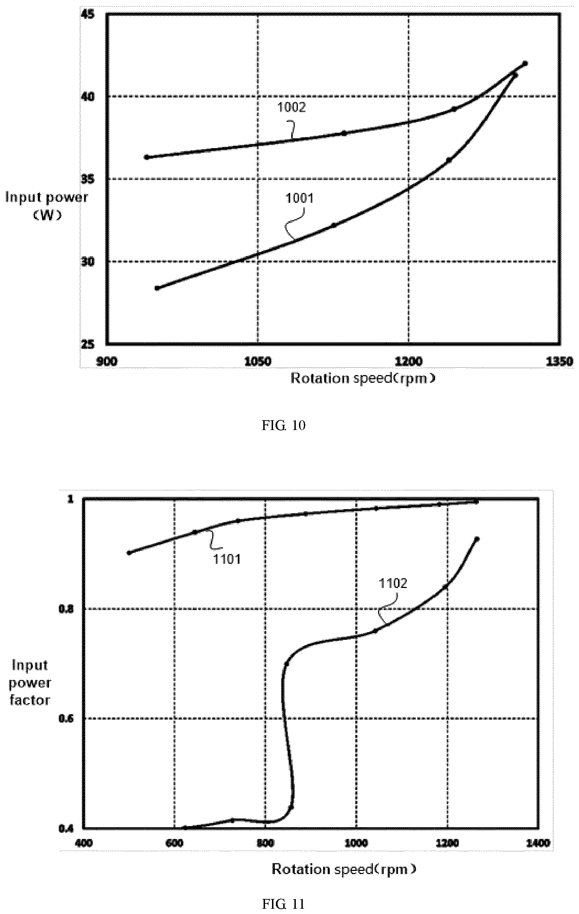

FIG. 10 illustrates a comparison testing diagram of input power at different rotation speeds of motor with respect to a prototype motor driver device according to an embodiment of the present application and a prior art commercial device (multi-tap motor driver). The horizontal ordinate represents the rotation speed rpm (rotation per minute) of the fan, and the vertical ordinate represents the input power (Watt) at the AC mains power input. The curve 1001 represents the input power of the embodiment of the present application, and the curve 1002 represents the input power of the prior art device. As shown in the figure, at the same rotation speed of the fan, the input power of the embodiment of the present application is much less than that in the prior art device, and thus has much higher efficiency, especially, when the rotation speed is low, the increase in efficiency is more prominent. In one comparison test, the efficiency can be improved by more than 25% at low rotation speed.

FIG. 11 illustrates a comparison testing diagram of input power factor at different rotation speeds of motor with respect to a prototype device according to an embodiment of the present application and a prior art commercial device (with multiple taps and an adjustable capacitor). The horizontal ordinate represents the rotation speed rpm (rotation per minute) of the fan, and the vertical ordinate represents the input power factor of the sinusoidal AC mains power. The curve 1101 represents the input power factor of the embodiment of the present application, and the curve 1102 represents the input power factor of the prior art device. As shown in the figure, at the same rotation speed, the input power factor of the embodiment of the present application is much higher than that in the prior art device.

## Claims

1. A stepless speed regulation circuit for driving a motor, comprising:
a switch circuit (11), having an input end (IN), a ground end (GND), a first output end (Vo1) and a second output end (Vo2), wherein the input end (IN) is configured to receive a unidirectional fluctuating signal (Vin) obtained by full-wave rectification of a sinusoidal AC signal (Vsin), the motor (M) is coupled between the first output end (Vol) and the second output end (Vo2), the switch circuit (11) comprises a first switch (Q1), a second switch (Q2), a third switch (Q3) and a fourth switch (Q4), wherein the first switch (Q1) is coupled between the input end (IN) and the first output end (Vo1), the second switch (Q2) is coupled between the input end (IN) and the second output end (Vo2), the third switch (Q3) is coupled between the second output end (Vo2) and the ground end (GND), and the fourth switch (Q4) is coupled between the first output end (Vol) and the ground end (GND);
a synchronizing signal generation circuit (12), configured to generate a synchronizing signal (SYN), wherein the synchronizing signal (SYN) is in a first state at a first half cycle period of the sinusoidal AC signal (Vsin) and is in a second state which is different from the first state at a second half cycle period of the sinusoidal AC signal (Vsin); and
a switch driving circuit (13), configured to select at least one switch from the first switch (Q1), the second switch (Q2), the third switch (Q3) and the fourth switch (Q4) to perform chopping at a first frequency according to the state of the synchronizing signal (SYN), and to forma sinusoidal envelope chopped signal (Vo) between the first output end (Vo1) and the second output end (Vo2), wherein the envelope line of the sinusoidal envelope chopped signal (Vo) is synchronous with the waveform of the sinusoidal AC signal (Vsin),
**characterized in that**
the first frequency is 10 times higher than the frequency of the sinusoidal AC signal (Vsin),
wherein, when the synchronizing signal (SYN) is in the first state, the switch driving circuit (13) turns on the first switch (Q1), turns off the fourth switch (Q4), and performs chopping on the second switch (Q2) and the third switch (Q3) in reverse phases; and when the synchronizing signal (SYN) is in the second state, the switch driving circuit (13) turns on the second switch (Q2), turns off the third switch (Q3), and performs chopping on the first switch (Q1) and the fourth switch (Q4) in reverse phases.

2. The stepless speed regulation circuit of claim 1, wherein the switch driving circuit (13) performs chopping on the at least one switch by outputting a pulse-width modulation signal (PWM).

3. The stepless speed regulation circuit of claim 1, further comprising a rectification circuit (10), wherein the rectification circuit (10) is configured to convert a mains sinusoidal AC signal (Vsin) into the unidirectional fluctuating steamed-bread-shaped wave signal (Vin).

4. The stepless speed regulation circuit of claim 1, wherein the synchronizing signal (SYN) is generated according to the sinusoidal AC signal (Vsin), and wherein, when the sinusoidal AC signal (Vsin) is higher than zero, the synchronizing signal (SYN) is in the first state, and when the sinusoidal AC signal (Vsin) is lower than zero, the synchronizing signal (SYN) is in the second state which is different from the first state.

5. The stepless speed regulation circuit of claim 1, further comprising a capacitor (Cf) coupled between the input end (IN) and the ground end (GND).

6. The stepless speed regulation circuit of claim5, wherein the effective capacitance between the input end (IN) and the ground end (GND) is less than 4.7 µF when not considering the capacitance of the switch circuit (11).

7. The stepless speed regulation circuit of claim 1, wherein each of the first switch (Q1), the second switch (Q2), the third switch (Q3) and the fourth switch (Q4) comprises a high-voltage power transistor, and wherein the drain electrodes or the collectors of the first switch (Q1) and the second switch (Q2) are coupled to the input end (IN), the source electrode or the emitter of the first switch (Q1) is coupled to the first output end (Vo1), the source electrode or the emitter of the second switch (Q2) is coupled to the second output end (Vo2); the source electrodes or the emitters of the third switch (Q3) and the fourth switch (Q4) are coupled to the ground end, (GND) the drain electrode or the collector of the third switch (Q3) is coupled to the second output end (Vo2), and the drain electrode or the collector of the fourth switch (Q4) is coupled to the first output end (Vo1).

8. The stepless speed regulation circuit of claim 1, wherein the switch driving circuit (13) comprises:
a logic circuit (32), having an input, a first output, a second output, a third output and a fourth output, wherein the input of the logic circuit (32) is coupled to the output of the synchronizing signal generation circuit (12);
a first half-bridge driving circuit (331), having two inputs and two outputs, wherein the two inputs of the first half-bridge driving circuit (331) are respectively coupled to the first output and the second output of the logic circuit (32), and the two outputs of the first half-bridge driving circuit (331) are respectively coupled to a control end of the first switch (Q1) and a control end of the fourth switch (Q4); and
a second half-bridge driving circuit (332), having two inputs and two outputs, wherein the two inputs of the second half-bridge driving circuit (332) are respectively coupled to the third output and the fourth output of the logic circuit (32), and the two outputs of the second half-bridgedriving circuit (332) are respectively coupled to a control end of the second switch (Q2) and a control end of the third switch (Q3).

9. The stepless speed regulation circuit of claim 1, wherein the motor (M) comprises a single-phase asynchronous motor (M).

10. A stepless speed regulation method for a driving motor, comprising:
full-wave rectifying a sinusoidal AC signal (Vsin) into a unidirectional fluctuating steamed-bread-shaped wave signal (Vin);
inputting the unidirectional fluctuating steamed-bread-shaped wave signal (Vin) into an input end (IN) of an H-bridge switch circuit (11);
providing a synchronizing signal (SYN), wherein, at a first half cycle period of the sinusoidal AC signal (Vsin), the synchronizing signal (SYN) is in a first state, and at a second half cycle period of the sinusoidalAC signal (Vsin), the synchronizing signal (SYN) is in a second state;
selecting at least one switch in the H-bridge switch circuit (11) to perform chopping according to the state of the synchronizing signal (SYN), so as to provide a sinusoidal envelope chopped signal (Vo) at output ends of the H-bridge switch circuit (11), wherein the envelope line of the sinusoidal envelope chopped signal (Vo) is synchronous with the waveform of the sinusoidalAC signal (Vsin); and
driving the motor (M) by using the sinusoidal envelope chopped signal (Vo), and regulating a rotation speed of the motor (M) by adjusting the duty cycle of the chopping signal that performs chopping on the at least one switch, **characterized by** when the synchronizing signal (SYN) is in the first state, a first switch (Q1) of the H-bridge switch circuit (11) is turned on, a fourth switch (Q4) of the H-bridge switch circuit (11) is turned off, and chopping in reverse phases are performed on a second switch (Q2) of the H-bridge switch circuit (11) and a third switch (Q3) of the H-bridge switch circuit (11); and when the synchronizing signal (SYN) is in the second state, a second switch (Q2) of the H-bridge switch circuit (11) is turned on, a third switch (Q3) of the H-bridge switch circuit (11) is turned off, and chopping in reverse phases are performed on a first switch (Q1) of the H-bridge switch circuit (11) and a fourth switch (Q4) of the H-bridge switch circuit (11).

11. The method of claim 10, wherein the method step of selecting at least one switch in the H-bridge switch circuit (11) to perform chopping comprises:
providing a first driving signal which is synchronized with the synchronizing signal (SYN)for driving a first switch (Q1) of the H-bridge switch circuit (11);
providing a second driving signal which is in reverse phase with the synchronizing signal (SYN) for driving a second switch (Q2) of the H-bridge switch circuit (11);
performing AND operation of the first driving signal and a pulse-width modulation signal (PWM) to get a first chopping signal for driving a third switch (Q3) of the H-bridge switch circuit (11); and
performing AND operation of the second driving signal and the pulse-width modulation signal (PWM) to get a second chopping signal for driving a fourth switch (Q4) of the H-bridge switch circuit (11).

## Patentansprüche

1. Schaltung zur stufenlosen Drehzahlregelung für den Antrieb eines Motors, aufweisend:
einen Schaltkreis (11), der ein Eingangsende (IN), ein Masseende (GND), ein erstes Ausgangsende (Vo1) und ein zweites Ausgangsende (Vo2) aufweist, wobei das Eingangsende (IN) derart konfiguriert ist, dass es ein unidirektional fluktuierendes Signal (Vin) empfängt, das durch Vollwellengleichrichtung eines sinusförmigen Wechselstromsignals (Vsin) erhalten wird, der Motor (M) zwischen dem ersten Ausgangsende (Vo1) und dem zweiten Ausgangsende (Vo2) gekoppelt ist, der Schaltkreis (11) einen ersten Schalter (Q1), einen zweiten Schalter (Q2), einen dritten Schalter (Q3) und einen vierten Schalter (Q4) aufweist, wobei der erste Schalter (Q1) zwischen das Eingangsende (IN) und ein erstes Ausgangsende (Vo1) gekoppelt ist, der zweite Schalter (Q2) zwischen das Eingangsende (IN) und das zweite Ausgangsende (Vo2) gekoppelt ist, der dritte Schalter (Q3) zwischen das zweite Ausgangsende (Vo2) und das Masseende (GND) gekoppelt ist, und der vierte Schalter (Q4) zwischen das erste Ausgangsende (Vo1) und das Masseende (GND) gekoppelt ist,
eine Synchronisationssignal-Erzeugungsschaltung (12), die konfiguriert ist, um ein Synchronisationssignal (SYN) zu erzeugen, wobei das Synchronisationssignal (SYN) bei einer ersten halben Zyklusperiode des sinusförmigen Wechselstromsignals (Vsin) in einem ersten Zustand ist und bei einer zweiten halben Zyklusperiode des sinusförmigen Wechselstromsignals (Vsin) in einem zweiten Zustand ist, der von dem ersten Zustand verschieden ist, und
eine Schalttreiberschaltung (13), die derart konfiguriert ist, dass er zumindest einen von dem ersten Schalter (Q1), dem zweiten Schalter (Q2), dem dritten Schalter (Q3) und dem vierten Schalter (Q4) auswählt, um eine Zerhackung bei einer ersten Frequenz in Abhängigkeit von dem Zustand des Synchronisationssignals (SYN) durchzuführen, und ein zerhacktes Sinushüllkurvensignal (Vo) zwischen dem ersten Ausgangsende (Vo1) und dem zweiten Ausgangsende (Vo2) zu bilden, wobei die Hüllkurve des zerhackten Sinushüllkurvensignals (Vo) synchron mit der Wellenform des sinusförmigen Wechselstromsignals (Vsin) ist,
**dadurch gekennzeichnet, dass**
die erste Frequenz zehnmal höher als die Frequenz des sinusförmigen Wechselstromsignals (Vsin) ist,
wobei, wenn das Synchronisationssignal (SYN) in dem ersten Zustand ist, die Schaltertreiberschaltung (13) den ersten Schalter (Q1) aktiviert, den vierten Schalter (Q4) deaktiviert und einen Hash an dem zweiten Schalter (Q2) und dem dritten Schalter (Q3) in umgekehrten Phasen ausführt; und wenn das Synchronisationssignal (SYN) in dem zweiten Zustand ist, der Schaltertreiber (13) den zweiten Schalter (Q2) einschaltet, den dritten Schalter (Q3) ausschaltet und eine Zerhackung an dem ersten Schalter (Q1) und dem vierten Schalter (Q4) in umgekehrten Phasen ausführt.

2. Schaltung zur stufenlosen Drehzahlregelung nach Anspruch 1, wobei die Schaltertreiberschaltung (13) eine Zerhackung an dem zumindest einen Schalter durchführt, indem sie ein Pulsweitenmodulationssignal (PWM) ausgibt.

3. Schaltung zur stufenlosen Drehzahlregelung nach Anspruch 1, ferner aufweisend eine Gleichrichterschaltung (10), wobei die Gleichrichterschaltung (10) derart konfiguriert ist, dass sie ein sinusförmiges Sektor-Wechselstromsignal (Vsin) in das unidirektional fluktuierende, Dampfbrot-Wellensignal (Vin) umwandelt.

4. Schaltung zur stufenlosen Drehzahlregelung nach Anspruch 1, wobei das Synchronisationssignal (SYN) gemäß dem sinusförmigen Wechselstromsignal (Vsin) erzeugt wird, und wobei, wenn das sinusförmige Wechselstromsignal (Vsin) größer als 0 ist, das Synchronisationssignal (SYN) in dem ersten Zustand ist, und wenn das sinusförmige Wechselstromsignal (Vsin) kleiner als 0 ist, das Synchronisationssignal (SYN) in dem zweiten Zustand ist, der sich von dem ersten Zustand unterscheidet.

5. Schaltung zur stufenlosen Drehzahlregelung nach Anspruch 1, ferner aufweisend einen Kondensator (Cf), der zwischen das Eingangsende (IN) und das Masseende (GND) geschaltet ist.

6. Schaltung zur stufenlosen Drehzahlregelung nach Anspruch 5, wobei die effektive Kapazität zwischen dem Eingangsende (IN) und dem Masseende (GND) ohne Berücksichtigung der Kapazität des Schaltkreises (11) weniger als 4,7 µF beträgt.

7. Schaltung zur stufenlosen Drehzahlregelung nach Anspruch 1, wobei jeder des ersten Schalters (Q1), des zweiten Schalters (Q2), des dritten Schalters (Q3) und des vierten Schalters (Q4) einen Hochspannungs-Leistungstransistor aufweist, und wobei die Drain-Elektroden oder Kollektoren des ersten Schalters (Q1) und des zweiten Schalters (Q2) an das Eingangsende (IN) gekoppelt sind, die Source-Elektrode oder der Emitter des ersten Schalters (Q1) an das erste Ausgangsende (Vo1) gekoppelt ist, die Source-Elektrode oder der Emitter des zweiten Schalters (Q2) an das zweite Ausgangsende (Vo2) gekoppelt ist, die Source-Elektroden oder Emitter des dritten Schalters (Q3) und des vierten Schalters (Q4) mit dem Masseende (GND) gekoppelt sind, die Drain-Elektrode oder der Kollektor des dritten Schalters (Q3) mit dem zweiten Ausgangsende (Vo2) gekoppelt ist, und die Drain-Elektrode oder der Kollektor des vierten Schalters (Q4) mit dem ersten Ausgangsende (Vo1) gekoppelt ist.

8. Schaltung zur stufenlosen Drehzahlregelung nach Anspruch 1, wobei die Schalterantriebsschaltung (13) aufweist:
eine Logikschaltung (32) mit einem Eingang, einem ersten Ausgang, einem zweiten Ausgang, einem dritten Ausgang und einem vierten Ausgang, wobei der Eingang der Logikschaltung (32) mit dem Ausgang der Schaltung (12) zur Erzeugung eines Synchronisationssignals gekoppelt ist,
eine erste Halbbrücken-Antriebsschaltung (331) mit zwei Eingängen und zwei Ausgängen, wobei die zwei Eingänge der ersten Halbbrücken-Antriebsschaltung (331) jeweils mit dem ersten Ausgang und dem zweiten Ausgang der Logikschaltung (32) gekoppelt sind, und die zwei Ausgänge der ersten Halbbrücken-Antriebsschaltung (331) jeweils mit einem Steuerende des ersten Schalters (Q1) und einem Steuerende des vierten Schalters (Q4) gekoppelt sind, und
eine zweite Halbbrücken-Antriebsschaltung (332) mit zwei Eingängen und zwei Ausgängen, wobei die zwei Eingänge der zweiten Halbbrücken-Antriebsschaltung (332) jeweils mit dem dritten Ausgang und dem vierten Ausgang der Logikschaltung (32) gekoppelt sind, und die zwei Ausgänge der zweiten Halbbrücken-Antriebsschaltung (332) jeweils mit einem Steuerende des zweiten Schalters (Q2) und einem Steuerende des dritten Schalters (Q3) gekoppelt sind.

9. Schaltung zur stufenlosen Drehzahlregelung nach Anspruch 1, wobei der Motor (M) einen einphasigen Asynchronmotor (M) umfasst.

10. Verfahren zur stufenlosen Drehzahlregelung für einen Antriebsmotor, umfassend:
Vollwellengleichrichten eines sinusförmigen Wechselstromsignals (Vsin) in ein unidirektional fluktuierendes Dampfbrotwellensignal (Vin);
Eingeben des unidirektional fluktuierenden Dampfbrot-Wellensignals (Vin) in ein Eingangsende (IN) einer H-Brücken-Schaltung (11);
Bereitstellen eines Synchronisationssignals (SYN), wobei über eine erste halbe Zyklusperiode des sinusförmigen Wechselstromsignals (Vsin) das Synchronisationssignal (SYN) in einem ersten Zustand ist, und über eine zweite halbe Zyklusperiode des sinusförmigen Wechselstromsignals (Vsin) das Synchronisationssignal (SYN) in einem zweiten Zustand ist,
Auswählen zumindest eines Schalters in der H-Brücken-Schaltung (11), um eine Zerhackung gemäß dem Zustand des Synchronisationssignals (SYN) durchzuführen, um so ein zerhacktes Sinushüllkurvensignal (Vo) an Ausgangsenden der H-Brücken-Schaltung (11) bereitzustellen, wobei die Hüllkurve des zerhackten Sinushüllkurvensignals (Vo) synchron mit der Wellenform des sinusförmigen Wechselstromsignals (Vsin) ist, und
Antreiben des Motors (M) unter Verwendung des zerhackten Signals mit sinusförmiger Hüllkurve (Vo), und Regeln einer Drehzahl des Motors (M) durch Einstellen des Tastverhältnisses des zerhackten Signals, das an dem zumindest einen Schalter eine Zerhackung durchführt,
**dadurch gekennzeichnet, dass**
wenn das Synchronisationssignal (SYN) im ersten Zustand ist, ein erster Schalter (Q1) der H-Brücken-Schaltung (11) eingeschaltet ist, ein vierter Schalter (Q4) der H-Brücken-Schaltung (11) ausgeschaltet ist, und das Umkehrphasen-Hashing an einem zweiten Schalter (Q2) der H-Brücken-Schaltung (11) und einem dritten Schalter (Q3) der H-Brücken-Schaltung (11) durchgeführt wird, und wenn das Synchronisationssignal (SYN) in dem zweiten Zustand ist, ein zweiter Schalter (Q2) der H-Brücken-Schaltung (11) eingeschaltet wird, ein dritter Schalter (Q3) der H-Brücken-Schaltung (11) ausgeschaltet wird, und ein Umkehrphasen-Hashing an einem ersten Schalter (Q1) der H-Brücken-Schaltung (11) und einem vierten Schalter (Q4) der H-Brücken-Schaltung (11) durchgeführt wird.

11. Verfahren nach Anspruch 10, wobei der Verfahrensschritt des Auswählens zumindest eines Schalters in der H-Brücken-Schaltung (11) zum Durchführen einer Hash-Funktion umfasst:
Bereitstellen eines ersten Treibersignals, das mit dem Synchronisationssignal (SYN) synchronisiert ist, um einen ersten Schalter (Q1) der H-Brücken-Schaltung (11) anzutreiben;
Bereitstellen eines zweiten Treibersignals, das sich in einer umgekehrten Phase mit dem Synchronisationssignal (SYN) befindet, um einen zweiten Schalter (Q2) der H-Brücken-Schaltung (11) anzutreiben;
Durchführen einer UND-Operation des ersten Treibersignals und eines Pulsbreitenmodulationssignals (PWM-Signals), um ein erstes Hash-Signal zum Treiben eines dritten Schalters (Q3) der H-Brücken-Schaltung (11) zu erhalten; und
Ausführen einer UND-Verknüpfung für das zweite Treibersignal und das Pulsbreitenmodulationssignal (PWM), um ein zweites Hash-Signal zum Treiben eines vierten Schalters (Q4) der H-Brücken-Schaltung (11) zu erhalten.

## Revendications

1. Circuit de régulation de vitesse continue pour l'entraînement d'un moteur, comprenant :
un circuit de commutation (11), présentant une extrémité d'entrée (IN), une extrémité de masse (GND), une première extrémité de sortie (Vol) et une deuxième extrémité de sortie (Vo2), dans lequel l'extrémité d'entrée (IN) est configurée pour recevoir un signal à fluctuation unidirectionnelle (Vin) obtenu par un redressement pleine onde d'un signal de CA sinusoïdal (Vsin), le moteur (M) est couplé entre la première extrémité de sortie (Vo1) et la deuxième extrémité de sortie (Vo2), le circuit de commutation (11) comprend un premier commutateur (Q1), un deuxième commutateur (Q2), un troisième commutateur (Q3) et un quatrième commutateur (Q4), dans lequel le premier commutateur (Q1) est couplé entre l'extrémité d'entrée (IN) et une première extrémité de sortie (Vo1), le deuxième commutateur (Q2) est couplé entre l'extrémité d'entrée (IN) et la deuxième extrémité de sortie (Vo2), le troisième commutateur (Q3) est couplé entre la deuxième extrémité de sortie (Vo2) et l'extrémité de masse (GND), et le quatrième commutateur (Q4) est couplé entre la première extrémité de sortie (Vo1) et l'extrémité de masse (GND) ;
un circuit de génération de signal de synchronisation (12), configuré pour générer un signal de synchronisation (SYN), dans lequel le signal de synchronisation (SYN) est dans un premier état à une première demi-période de cycle du signal de CA sinusoïdal (Vsin) et est dans un deuxième état qui est différent du premier état à une seconde demi-période de cycle du signal de CA sinusoïdal (Vsin) ; et
un circuit d'entraînement de commutation (13) configuré pour sélectionner au moins un commutateur parmi le premier commutateur (Q1), le deuxième commutateur (Q2), le troisième commutateur (Q3) et le quatrième commutateur (Q4) pour effectuer un hachage à une première fréquence en fonction de l'état du signal de synchronisation (SYN), et pour former un signal haché d'enveloppe sinusoïdale (Vo) entre la première extrémité de sortie (Vo1) et la deuxième extrémité de sortie (Vo2), dans lequel la ligne d'enveloppe du signal haché d'enveloppe sinusoïdale (Vo) est synchrone avec la forme d'onde du signal de CA sinusoïdal (Vsin),
**caractérisé en ce que**
la première fréquence est 10 fois plus élevée que la fréquence du signal de CA sinusoïdal (Vsin),
dans lequel, lorsque le signal de synchronisation (SYN) est dans le premier état, le circuit d'entraînement de commutateur (13) active le premier commutateur (Q1), désactive le quatrième commutateur (Q4) et réalise un hachage sur le deuxième commutateur (Q2) et le troisième commutateur (Q3) en phases inverses ; et lorsque le signal de synchronisation (SYN) est dans le deuxième état, le circuit d'entraînement de commutateur (13) active le deuxième commutateur (Q2), désactive le troisième commutateur (Q3) et réalise un hachage sur le premier commutateur (Q1) et le quatrième commutateur (Q4) en phases inverses.

2. Circuit de régulation de vitesse à variation continue selon la revendication 1, dans lequel le circuit d'entraînement de commutateur (13) réalise un hachage sur l'au moins un commutateur en délivrant en sortie un signal de modulation de largeur d'impulsion (PWM).

3. Circuit de régulation de vitesse continue selon la revendication 1, comprenant en outre un circuit de redressement (10), dans lequel le circuit de redressement (10) est configuré pour convertir un signal de CA sinusoïdal de secteur (Vsin) en le signal d'onde en forme de pain vapeur à fluctuation unidirectionnelle (Vin).

4. Circuit de régulation de vitesse continue selon la revendication 1, dans lequel le signal de synchronisation (SYN) est généré selon le signal de CA sinusoïdal (Vsin), et dans lequel, lorsque le signal de CA sinusoïdal (Vsin) est supérieur à 0, le signal de synchronisation (SYN) est dans le premier état, et lorsque le signal de CA sinusoïdal (Vsin) est inférieur à 0, le signal de synchronisation (SYN) est dans le deuxième état qui est différent du premier état.

5. Circuit de régulation de vitesse continue selon la revendication 1, comprenant en outre un condensateur (Cf) couplé entre l'extrémité d'entrée (IN) et l'extrémité de masse (GND).

6. Circuit de régulation de vitesse continue selon la revendication 5, dans lequel la capacité effective entre l'extrémité d'entrée (IN) et l'extrémité de masse (GND) est inférieure à 4,7 µF sans prendre en considération la capacité du circuit de commutation (11).

7. Circuit de régulation de vitesse continue selon la revendication 1, dans lequel chacun du premier commutateur (Q1), du deuxième commutateur (Q2), du troisième commutateur (Q3) et du quatrième commutateur (Q4) comprend un transistor à puissance haute tension, et dans lequel les électrodes de drain ou les collecteurs du premier commutateur (Q1) et du deuxième commutateur (Q2) sont couplés à l'extrémité d'entrée (IN), l'électrode source ou l'émetteur du premier commutateur (Q1) est couplé(e) à la première extrémité de sortie (Vo1), l'électrode source ou l'émetteur du deuxième commutateur (Q2) est couplé(e) à la deuxième extrémité de sortie (Vo2) ; les électrodes de source ou les émetteurs du troisième commutateur (Q3) et du quatrième commutateur (Q4) sont couplés à l'extrémité de masse(GND), l'électrode de drain ou le collecteur du troisième commutateur (Q3) est couplé(e) à la deuxième extrémité de sortie (Vo2), et l'électrode de drain ou le collecteur du quatrième commutateur (Q4) est couplé(e) à la première extrémité de sortie (Vo1).

8. Circuit de régulation de vitesse continue selon la revendication 1, dans lequel le circuit d'entraînement de commutateur (13) comprend :
un circuit logique (32) présentant une entrée, une première sortie, une deuxième sortie, une troisième sortie et une quatrième sortie, dans lequel l'entrée du circuit logique (32) est couplée à la sortie du circuit de génération de signal de synchronisation (12) ;
un premier circuit d'entraînement en demi-pont (331) présentant deux entrées et deux sorties, dans lequel les deux entrées du premier circuit d'entraînement en demi-pont (331) sont respectivement couplées à la première sortie et à la deuxième sortie du circuit logique (32), et les deux sorties du premier circuit d'entraînement en demi-pont (331) sont respectivement couplées à une extrémité de commande du premier commutateur (Q1) et à une extrémité de commande du quatrième commutateur (Q4) ; et
un deuxième circuit d'entraînement en demi-pont (332) présentant deux entrées et deux sorties, dans lequel les deux entrées du deuxième circuit d'entraînement en demi-pont (332) sont respectivement couplées à la troisième sortie et à la quatrième sortie du circuit logique (32), et les deux sorties du deuxième circuit d'entraînement en demi-pont (332) sont respectivement couplées à une extrémité de commande du deuxième commutateur (Q2) et à une extrémité de commande du troisième commutateur (Q3).

9. Circuit de régulation de vitesse continue selon la revendication 1, dans lequel le moteur (M) comprend un moteur asynchrone monophasé (M).

10. Procédé de régulation de vitesse continue pour un moteur d'entraînement, comprenant :
le redressement en onde pleine d'un signal de CA sinusoïdal (Vsin) en un signal d'onde en forme de pain vapeur à fluctuation undirectionnelle (Vin) ;
l'entrée du signal d'onde en forme de pain vapeur à fluctuation unidirectionnelle (Vin) dans une extrémité d'entrée (IN) d'un circuit de commutation à pont en H (11) ;
la fourniture d'un signal de synchronisation (SYN), dans lequel, sur une première demi-période de cycle du signal de CA sinusoïdal (Vsin), le signal de synchronisation (SYN) est dans un premier état, et sur une seconde demi-période de cycle du signal de CA sinusoïdal (Vsin), le signal de synchronisation (SYN) est dans un deuxième état ;
la sélection d'au moins un commutateur dans le circuit de commutation à pont en H (11) pour réaliser un hachage selon l'état du signal de synchronisation (SYN), de manière à fournir un signal haché à enveloppe sinusoïdale (Vo) sur des extrémités de sortie du circuit de commutation à pont en H (11), dans lequel la ligne d'enveloppe du signal haché à enveloppe sinusoïdale (Vo) est synchrone avec la forme d'onde du signal de CA sinusoïdal (Vsin) ;
et
l'entraînement du moteur (M) en utilisant le signal haché à enveloppe sinusoïdal (Vo), et la régulation d'une vitesse de rotation du moteur (M) en ajustant le rapport cyclique du signal haché qui réalise un hachage sur l'au moins un commutateur, **caractérisé en ce que**
lorsque le signal de synchronisation (SYN) est dans le premier état, un premier commutateur (Q1) du circuit de commutation à pont en H (11) est activé, un quatrième commutateur (Q4) du circuit de commutation à pont en H (11) est désactivé, et le hachage en phases inverses est réalisé sur un deuxième commutateur (Q2) du circuit de commutation à pont en H (11) et un troisième commutateur (Q3) du circuit de commutation à pont en H (11) ; et lorsque le signal de synchronisation (SYN) est dans le deuxième état, un deuxième commutateur (Q2) du circuit de commutation à pont en H (11) est activé, un troisième commutateur (Q3) du circuit de commutation à pont en H (11) est désactivé, et un hachage en phases inverses est réalisé sur un premier commutateur (Q1) du circuit de commutation à pont en H (11) et un quatrième commutateur (Q4) du circuit de commutation à pont en H (11).

11. Procédé selon la revendication 10, dans lequel l'étape de procédé de sélection d'au moins un commutateur dans le circuit de commutation à pont en H (11) pour réaliser un hachage comprend :
la fourniture d'un premier signal d'entraînement qui est synchronisé avec le signal de synchronisation (SYN) pour entraîner un premier commutateur (Q1) du circuit de commutation à pont en H (11) ;
la fourniture d'un deuxième signal d'entraînement qui est dans une phase inverse avec le signal de synchronisation (SYN) pour entraîner un deuxième commutateur (Q2) du circuit de commutation à pont en H (11) ;
la réalisation d'une opération ET du premier signal d'entraînement et d'un signal de modulation de largeur d'impulsion (PWM) pour obtenir un premier signal de hachage pour l'entraînement d'un troisième commutateur (Q3) du circuit de commutation à pont en H (11) ; et
la réalisation d'une opération ET pour le deuxième signal d'entraînement et le signal de modulation de largeur d'impulsion (PWM) pour obtenir un deuxième signal de hachage pour l'entraînement d'un quatrième commutateur (Q4) du circuit de commutation à pont en H (11).
